# EUROPÄISCHE PATENTSCHRIFT

(11) **EP 4 315 161 B1**
(45) Veröffentlichungstag und Bekanntmachung des Hinweises auf die Patenterteilung: **29.10.2025**
(21) Anmeldenummer: 22718861.2
(22) Anmeldetag: 23.03.2022
(51) Int. Cl.: G06K 19/077

(54) **CHIPKARTE UND VERFAHREN ZUR HERSTELLUNG EINER CHIPKARTE**
CHIP CARD, AND PROCESS FOR MANUFACTURING A CHIP CARD
CARTE À PUCE ET PROCÉDÉ DE FABRICATION D'UNE CARTE À PUCE

(30) Priorität: 25.03.2021 DE 102021001579
(43) Veröffentlichungstag der Anmeldung: 07.02.2024
(73) Patentinhaber: Giesecke+Devrient ePayments GmbH, 81677 München (DE)
(72) Erfinder: MINKS, Andreas, 83707 Bad Wiessee (DE)
(74) Vertreter: Giesecke+Devrient IP
(86) Internationale Anmeldenummer: PCT/EP2022/025118
(87) Internationale Veröffentlichungsnummer: WO 2022/199894

(56) Entgegenhaltungen:
- US-A1- 2016 110 639
- US-A1- 2018 339 503

## Beschreibung

Die Erfindung betrifft eine Chipkarte sowie ein Verfahren zur Herstellung einer Chipkarte.

Kartenförmige Datenträger, insbesondere Chipkarten, werden in vielen Bereichen eingesetzt, beispielsweise zur Durchführung von Transaktionen des bargeldlosen Zahlungsverkehrs, als Ausweisdokumente oder zum Nachweis von Zugangsberechtigungen. Eine Chipkarte weist einen Kartenkörper und einen in den Kartenkörper eingebetteten integrierten Schaltkreis zum Beispiel in Form eines Chipmoduls mit einem Chip auf. Das Chipmodul wird üblicherweise in eine Kavität oder Modulöffnung des Kartenkörpers eingesetzt.

US 2016/110639 A1 zeigt den Oberbegriff von Anspruch 1.

Im Folgenden werden Chipmodule beziehungsweise Chipkarten mit integrierter Spule betrachtet, welche eine berührungslose oder kontaktlose Kommunikation ermöglichen. Beispielsweise können Chipkartencontroller mit RFID-Funktionalität eingesetzt werden.

Chipkarten mit einer metallischen Oberfläche sind besonders unempfindlich und werden als wertig angesehen. Deshalb finden zunehmend Chipkarten mit innen- oder außenliegender Metallschicht Verbreitung.

Der Funktionsweise einer solchen Karte besteht darin, dass ein Chipmodul verwendet wird, das selbst eine Spule enthält (Coil On Modul). Diese Spule koppelt auf den Kartenkörper mit einer Metallschicht. Diese Kopplung funktioniert nur dann, wenn im Metallkartenkörper ein Schlitz enthalten ist. Dieser Schlitz wird benötigt, um den unerwünschten Ringschluss des magnetischen Flusses zu unterbinden.

Mit der Einbringung einer metallischen Schicht entstehen trotz des Schlitzes nachteilige Abschirmungen der Antenne.

Aufgabe der vorliegenden Erfindung ist es daher, eine Chipkarte mit verbesserter Antenne zur Verfügung zu stellen.

Diese Aufgabe wird durch eine Chipkarte beziehungsweise ein Verfahren zur Herstellung einer Chipkarte gemäß den unabhängigen Patentansprüchen gelöst. Ausgestaltungen und Weiterbildungen der Erfindung sind in den abhängigen Ansprüchen angegeben.

Eine erfindungsgemäße Chipkarte umfasst ein flexibles Inlay gemäß Anspruch 1.

Ein Grundgedanke der vorliegenden Erfindung besteht darin, dass mittels eines Inlays die integrierte Schaltung und/oder die Antenne aus dem Bereich der Ausnehmung verlagert werden kann und trotzdem eine Metallschicht in der Chipkarte vorhanden ist.

Der hier vorgeschlagene Kartenkörper hat somit den Vorteil, dass die Chipkarte eine vergrößerte Antenne hat, wodurch sowohl die Übertragungsleistung als auch der Energieeintrag erhöht wird.

Es kann vorgesehen sein, dass die obere Schicht eine weitere Metallschicht mit einem Schlitz ist, der sich von einer Umfangsfläche der weiteren Metallschicht bis zu der Ausnehmung erstreckt und der sich durch die gesamte Dicke der weiteren Metallschicht erstreckt. Mit der oberen Schicht als weitere Metallschicht kann eine sogenannte Metal Face Karte bereitgestellt werden. Bei dieser Karte bestehen die Vorderseite und die Rückseite aus wertigem Metall.

Es kann ferner vorgesehen sein, dass zwischen der weiteren Metallschicht und dem Inlay eine Klebstoffschicht mit einer weiteren Ausnehmung vorgesehen ist, dass die weitere Ausnehmung der Klebstoffschicht kleinere Abmessungen als die Ausnehmung der weiteren Metallschicht aufweist und dass ein Teil der Klebstoffschicht zwischen den Kontakten und einer Innenwand der Ausnehmung der weiteren Metallschicht angeordnet ist. Auf diese Weise kann die Klebstoffschicht eine elektrische Isolierung zwischen der weiteren Metallschicht und der Ausnehmung zur Verfügung stellen.

Es kann vorgesehen sein, dass die obere Schicht eine Schicht mit optischen Merkmalen und eine außenliegende Overlay-Schicht umfasst. Diese beiden Schichten können aus einem Kunststoff bestehen und können zum Beispiel für Sicherheitsmerkmale im optischen, IR- und/oder UV-Bereich sowie Gestaltungsmerkmale verwendet werden. Zudem können Informationen zur Verfügung gestellt werden.

Es kann ferner vorgesehen sein, dass die Metallschicht mit mindestens einer außenliegenden Schicht bedeckt ist. Diese Schicht oder Schichten können aus einem Kunststoff bestehen und können zum Beispiel für Sicherheitsmerkmale im optischen, IR- und/oder UV-Bereich sowie Gestaltungsmerkmale verwendet werden. Zudem können Informationen zur Verfügung gestellt werden.

Es kann vorgesehen sein, dass ein Einsatz unterhalb der Kontakte angeordnet ist, der die Kontakte in der Ausnehmung der oberen Schicht positioniert. Dieser Einsatz besteht zum Beispiel aus einem Kunststoff und kann die identischen Abmessungen wie die Kontakte aufweisen. Bei der Herstellung der Chipkarte kann der Einsatz die Kontakte in der Ausnehmung in die richtige Position drücken, so dass die Kontakte flächenbündig zu der oberen Schicht sind. Da unterhalb des Einsatzes die Metallschicht vorhanden ist, kann auf einfache Weise ein gezielter und flächiger Druck auf den Einsatz ausgeübt werden. Dies erleichtert die Herstellung der Chipkarte, insbesondere die Positionierung der Kontakte in der Ausnehmung der oberen Schicht. Der Einsatz kann als einzelnes Element oder als Bestandteil einer Schicht, wie zum Beispiel dem Inlay oder einer darunter angeordneten Schicht ausgebildet sein.

Es kann ferner vorgesehen sein, dass eine Höhe des Einsatzes, des Inlays und der Kontakte einer Höhe der Ausnehmung der oberen Schicht entspricht. Dadurch kann einfach sichergestellt werden, dass die Kontakte flächenbündig zu der oberen Schicht sind.

Es kann vorgesehen sein, dass innenliegende Kanten der Ausnehmung der oberen Schicht mit einer Fase versehen sind. Zum einen kann eine Selbstzentrierung der Kontakte in der Ausnehmung bei dem Zusammenfügen der Schichten erreicht werden. Zum anderen kann eine übermäßige Quetschung oder gar Beschädigung des Inlays bei dem Zusammenfügen insbesondere bei einer Metallschicht verhindert werden.

Es kann ferner vorgesehen sein, dass die Antenne im Bereich einer Umfangsfläche der Chipkarte angeordnet ist. Somit kann die Chipkarte eine vergrößerte Antenne haben, wodurch sowohl die Übertragungsleistung als auch der Energieeintrag erhöht wird. Wenn die Windungen der Antenne im Bereich der Umfangsfläche, das heißt möglichst weit außen angeordnet sind, kann die Größe oder der Durchmesser der Antenne maximiert werden.

Ein erfindungsgemäßes Verfahren zur Herstellung einer Chipkarte umfasst die Schritte gemäß Anspruch 10.

Die verschiedenen Schritte des Verfahrens können auch in anderen Reihenfolgen ausgeführt werden. Zum Beispiel können die Kontakte erst bei dem Laminieren der Schichten in der Ausnehmung angeordnet werden. Vorher werden die Kontakte dann an der Ausnehmung angeordnet, zum Beispiel unterhalb der Ausnehmung positioniert. Ansonsten gelten die gleichen Vorteile und Modifikationen wie zuvor beschrieben.

Die vorliegende Erfindung wird nachfolgend mit Bezug auf die beiliegenden Zeichnungen beispielhaft beschrieben. Darin zeigen
- Fig. 1:: eine Draufsicht einer Chipkarte;
- Fig. 2:: eine Schnittdarstellung einer Chipkarte mit zwei Metallschichten;
- Fig. 3:: eine Schnittdarstellung einer Chipkarte mit einer Metallschicht; und
- Fig. 4:: eine schematische Darstellung eines Verfahrens zur Herstellung einer Chipkarte.

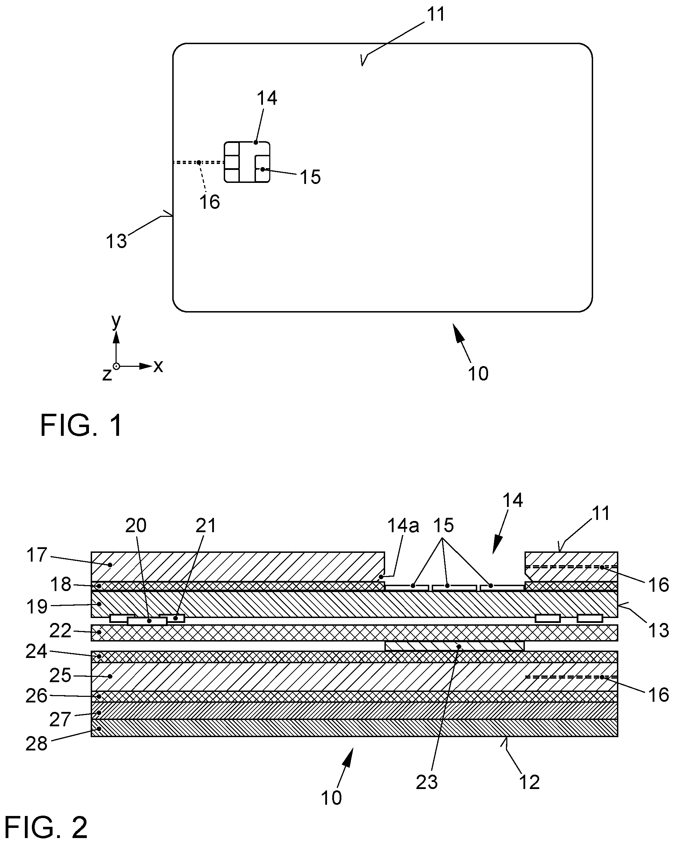

Fig. 1 zeigt eine Chipkarte 10 mit einem Kartenkörper. Die Chipkarte 10 hat eine im wesentlichen rechteckige Grundform mit zwei gegenüberliegenden Hauptflächen, von denen eine Hauptfläche 11 in Fig. 1 sichtbar ist. Die andere, gegenüberliegende Hauptfläche 12 ist in Fig. 2 dargestellt. Die beiden Hauptflächen 11, 12 verlaufen parallel zueinander und sind durch eine umlaufende Umfangsfläche 13 verbunden.

Die Chipkarte 10 hat eine rechteckige Form in einer x-y-Ebene, in der die Umfangsfläche 13 mit zwei in x-Richtung verlaufenden Längsflächen und zwei in y-Richtung verlaufenden Stirnflächen liegt. Die Dicke oder Höhe der Chipkarte 10 erstreckt sich in z-Richtung.

Eine Ausnehmung 14 für Kontakte 15 der Chipkarte 10 ist in der Hauptfläche 11 der Chipkarte 10 ausgenommen. Die Ausnehmung 14 erstreckt sich in die Chipkarte 10 hinein. Die Ausnehmung 14 wird beispielsweise mittels eines Laserarbeitsganges oder Fräsarbeitsganges erstellt.

In der Chipkarte 10 ist in einer Metallschicht ein Schlitz 16 vorgesehen, der sich von der Umfangsfläche 13 oder mit anderen Worten von einer Außenkante der Chipkarte 10 zu der Ausnehmung 14 erstreckt. Der Schlitz 16 verläuft in y-Richtung, das heißt parallel zu der Längsfläche. Der Schlitz 16 hat zum Beispiel eine Breite zwischen 30 µm und 100 µm, bevorzugt zwischen 50 µm und 80 µm.

In Fig. 1 ist der Schlitz 16 auf einer linken Seite dargestellt. Der Schlitz 16 kann auch an einer rechten, oberen oder unteren Seite der Chipkarte 10 angeordnet sein. Der Schlitz 16 dient zur Vermeidung von Kurzschlussströmen beziehungsweise Wirbelströmen.

Fig. 2 zeigt eine Schnittdarstellung einer Chipkarte 10. Die Chipkarte 10 ist ein Schichtenstapel mit zwei Hauptflächen 11 und 12, zwischen denen die einzelnen Schichten vorzugsweise parallel zueinander angeordnet sind. Die einzelnen Schichten können mittels Klebern, die zumindest zum Teil elektrisch isolierend sind, miteinander verbunden oder fixiert sein.

In dem in Fig. 2 dargestellten Schichtenstapel der Chipkarte 10 ist oben oder an der Vorderseite der Chipkarte 10 eine obere Schicht 17 in Form einer äußeren Metallschicht angeordnet. In dieser oberen Metallschicht ist eine Ausnehmung 14 angeordnet, welche zur Aufnahme der Kontakte 15 der Chipkarte 10 eingerichtet ist. Die Ausnehmung 14 durchdringt die Schicht in der ganzen Dicke, und hat Abmessungen, welche den Abmessungen der Kontakte 15 entsprechen. An einem unteren Rand der Ausnehmung 14 ist eine Fase 14a vorgesehen, welche ein Einführen der Kontakte 15 in die Ausnehmung 14 erleichtert.

In der oberen Metallschicht 17 ist der Schlitz 16 ausgebildet, der zur Vermeidung von Wirbelströmen bzw. Kurzschlüssen dient. Der Schlitz 16 durchdringt die obere Metallschicht sind 10 in ihrer ganzen Dicke oder Höhe.

In Figur 2 ist der Schichtenstapel der Chipkarte 10 während der Herstellung der Chipkarte 10 dargestellt. Die einzelnen Schichten des Schichtenstapels sind schon zueinander ausgerichtet oder positioniert, jedoch ist die Chipkarte 10 noch nicht laminiert.

Unterhalb der oberen Schicht 17 schließt sich eine Klebstoffschicht 18 an. Der Begriff unterhalb bedeutet gegenüberliegend zu einer Vorderseite 11 der Chipkarte 10, also gewissermaßen in das Innere der Chipkarte 10 hinein.

Unterhalb dieser Klebstoffschicht 18 ist ein Inlay 19 zum Beispiel aus flexiblem Kunststoff wie PET angeordnet. Das Inlay 19 trägt an einer Oberseite die Kontakte 15, welche zum Beispiel aus Aluminium bestehen. An einer Unterseite des Inlays 19, ist eine integrierte Schaltung, 20, zum Beispiel in Form eines Chips angeordnet. Es kann zum Beispiel ein Flip Chip Verfahren zum Einsatz gelangen.

Weiterhin ist an der Unterseite des flexiblen Inlays 19 eine Spule oder Antenne 21 angeordnet. Die Antenne 21 versorgt die integrierte Schaltung 20 mit Energie und/oder Signalen. So kann ein aus der oberen Metallschicht 17 beziehungsweise der Ausnehmung 14 austretendes elektromagnetisches Feld in die Antenne 21 eingekoppelt werden. Dabei verlaufen magnetische Feldlinien durch die Ausnehmung 14.

Für eine Kontaktierung der Chipkarte 10 über die Kontakte 15 ist die integrierte Schaltung 20 über hier nicht dargestellte innere Leitungen des Inlays 19 mit den Kontakten verbunden. So kann die Chipkarte 10 eine Dual Interface Funktionalität zur Verfügung stellen.

Die integrierte Schaltung 20 und/oder die Antenne 21 können auch an der Oberseite des flexiblen Inlays 19 angeordnet sein. Die einzelnen Windungen der Antenne 21 sind im Bereich einer Umfangsfläche 13 der Chipkarte 10 angeordnet. So kann die Größe beziehungsweise der Durchmesser der Antenne 21 maximiert werden. Dies verbessert sowohl den Energieeintrag in die integrierte Schaltung 20 als auch die Datenübertragung zu der integrierten Schaltung 20.

Die Klebstoffschicht 18 hat ebenfalls eine Ausnehmung 14. Es kann vorgesehen sein, dass diese Ausnehmung 14 der Klebstoffschicht 18 kleinere Abmessungen hat als die Ausnehmung 14 der oberen Metallschicht 17. Dies führt dazu, dass wenn die Kontakte 15 von unten in die Ausnehmung 14 gedrückt werden, dass der in die Ausnehmung 14 der oberen Metallschicht 17 überstehende Bereich der Klebstoffschicht 18 die Seitenwände der Ausnehmung 14 der oberen Metallschicht 17 bedeckt. Dies führt zu einer elektrischen Isolierung zwischen den Kontakten 15 und der oberen Metallschicht 17. Dazu wird eine elektrisch nichtleitende Klebstoffschicht 18 verwendet.

Unterhalb des flexiblen Inlays 19, schließt sich eine optionale PVC-Schicht 22 an. Diese Schicht kann als elektrische Isolation für weiter folgende Metallschichten dienen beziehungsweise kann diese PVC-Schicht 22, das flexible Inlay 19, bei der Montage der Chipkarte 10 schützen. Unterhalb der PVC-Schicht 22 ist ein Einsatz 23 angeordnet, dessen Abmessungen den Abmessungen der Ausnehmung 14 entsprechen. Bei einer Montage der Chipkarte 10 wird dieser Einsatz nach oben, das heißt in Richtung der Ausnehmung 14, gedrückt oder gepresst, wodurch die Kontakte 15 nach oben in die Ausnehmung 14 hineingeschoben werden. Dabei kann die PVC-Schicht 22 das Inlay 19 beziehungsweise die Antenne 21 schützen.

Die Höhe des Einsatzes 23, der PVC-Schicht 22, des Inlays 19, sowie der Kontakte 15 kann dabei der Höhe beziehungsweise Tiefe der Ausnehmung 14 in der oberen Schicht 17, hier in Form einer Metallschicht, entsprechen. Dadurch ist sichergestellt, dass die Oberfläche der Kontakte 15 bündig mit der Hauptfläche 11 der Chipkarte 10 abschließt.

Unterhalb des Einsatzes 23 ist eine weitere Klebstoffpflicht 24 angeordnet. An diese Klebstoffschicht 24 schließt sich eine weitere Metallschicht 25 an. Auch diese Metallschicht 25 verfügt über einen Schlitz 16, der sich von der Umfangsfläche 13 der Chipkarte 10 beziehungsweise der Metallschicht 25 bis in den Bereich der Ausnehmung 14 erstreckt. In dieser inneren Metallschicht 25 befindet sich keine Ausnehmung 14, das heißt dass die innere Metallschicht 25 sich vollflächig durch die Chipkarte 10 erstreckt. Entsprechend erstreckt sich der Schlitz 16 bis zu einer Projektion der Ausnehmung 14.

Unterhalb der Metallschicht können sich wie in Figur 2 dargestellt, weitere Schichten anschließen. Ebenso ist es möglich, dass der Aufbau der Chipkarte 10 an der hier unten liegenden Rückseite mit der Metallschicht 25 endet.

In dem hier vorliegenden Fall schließt sich eine Klebstoffschicht 26 an die Metallschicht 25 an. So kann unterhalb der Klebstoffschrift 26 eine Schicht 27 mit optischen Merkmalen sowie eine außenliegende Overlay-Schicht 28 vorgesehen sein. Das oder die optischen Merkmale können zum Beispiel Sicherheitsmerkmale, Informationen und/oder Dekorelemente umfassen. Mittels einer oder mehr der Overlay-Schichten 28 lassen sich weitere optische Effekte erzielen und die Schicht 27 kann geschützt werden.

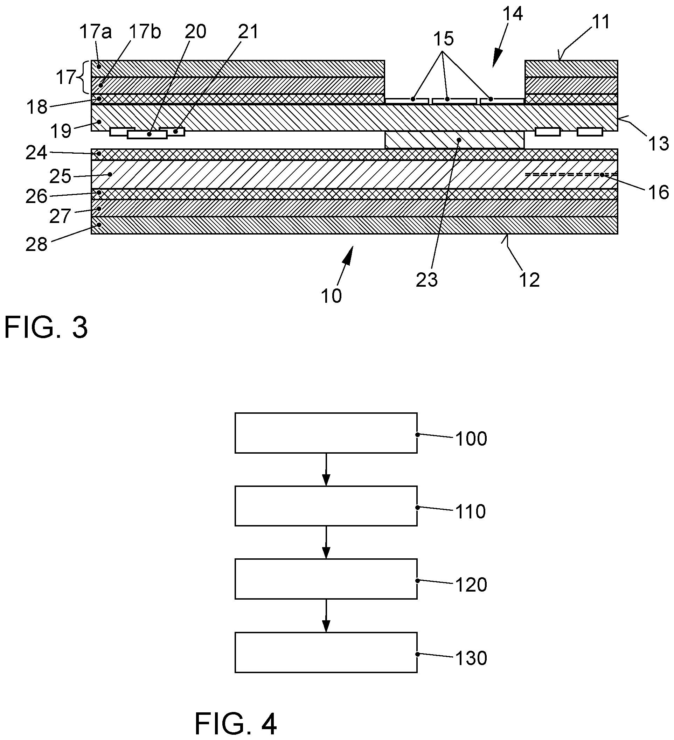

Figur 3 zeigt ein weiteres Ausführungsbeispiel eine Chipkarte 10. Der Aufbau beziehungsweise die Schichtenfolge der Chipkarte 10 aus Figur 3 ist ähnlich zu dem Aufbau der in Figur 2 dargestellten Chipkarte ziehen. Entsprechend wird teilweise auf Figur 2 verwiesen.

Hier besteht die obere Schicht 17 aus einer Overlay-Schicht 17a und einer inneren Schicht 17b mit optischen Merkmalen. Die beiden Schichten 17a und 17b können zum Beispiel den beiden Schichten 28 und 27 aus Figur 2 entsprechen.

In den beiden Schichten 17a und 17b ist die Ausnehmung 14 ausgenommen. Eine Fase wie in Figur 2 kann ebenfalls vorgesehen sein. An die innere Schicht 17b mit optischen Merkmalen schließt sich wiederum eine Klebstoffschicht 18 an. An die Klebstoffschicht 18 schließt sich ein flexibles Inlay 19 an, welches dem flexiblen Inlay 19 aus der Figur 2 entspricht. Auch die weiteren Klebstoffpflichten 24 und 26 sowie die innere Metallschicht 25 entsprechend den in Figur 2 dargestellten Schichten. Gleiches gilt für die innere Schicht 27 mit optischen Merkmalen und die Overlay-Schicht 28. Wiederum sind die 3 Schichten 26, 27 und 28 optional.

Die Chipkarte 10 kann zum Beispiel eine Dicke oder Höhe von etwa 920 µm betragen. Die Dicke des gesamten Kartenkörpers 10 sollte die maximale Dicke eines Chipkartenkörpers gemäß ISO 7810 nicht übersteigen.

Fig. 4 zeigt eine schematische Darstellung eines Verfahrens zur Herstellung einer Chipkarte 10. Das Verfahren beschreibt im Wesentlichen die Herstellung der in Fig. 3 dargestellten Chipkarte 10.

In einem ersten Schritt 100 erfolgt ein Bereitstellen eines flexiblen Inlays 19 mit an einer Oberseite des Inlays 19 angeordneten Kontakten 15 der Chipkarte 10, wobei das Inlay 19 eine zu den Kontakten 15 beabstandete integrierte Schaltung 20 und Antenne 21 trägt.

In einem zweiten Schritt 110 erfolgt ein Anordnen einer oberen Schicht 17 mit einer Ausnehmung 14 an der Oberseite des Inlays 19 derart, dass die Kontakte 15 in oder an der Ausnehmung 14 angeordnet sind. Dieses Anordnen kann ein Ausrichten oder Positionieren umfassen und optional einen Klebevorgang. Die Kontakte 15 können bereits teilweise in der Ausnehmung 14 oder an, das heißt unterhalb der Ausnehmung 14 angeordnet sein.

In einem dritten Schritt 120 erfolgt ein Anordnen einer inneren Metallschicht 25 mit einem Schlitz 16 unterhalb des Inlays 19, der sich von einer Umfangsfläche 13 der Metallschicht 25 bis in den Bereich der Ausnehmung 14 erstreckt und der sich durch die gesamte Dicke der Metallschicht 25 erstreckt. Zwischen der inneren Metallschicht 25 und dem Inlay 19 kann ein Kleber zum Beispiel in Form einer Klebstoffschrift 26 angebracht werden.

Optional kann ein Einsatz 23 zwischen der Metallschicht 25 und dem Inlay 19 angeordnet werden. Die Abmessungen des Einsatzes 23 entsprechen den Abmessungen der Ausnehmung 14.

In einem vierten Schritt 130 erfolgt ein Laminieren der einzelnen Schichten zu einer Chipkarte 10. Unter Hitze- und Druckeinwirkung werden die einzelnen Schichten der Chipkarte 10 zusammengeführt.

Bei dem Laminieren oder einer Montage der Chipkarte 10 wird der Einsatz 23, wenn er vorgesehen ist, in die Ausnehmung 14 gepresst, wodurch die Kontakte 15 nach oben bis zu der Hauptfläche 11 geschoben werden.

Optional kann eine Schicht 27 mit optischen Merkmalen sowie eine außenliegende Overlay-Schicht 28 auf der Unterseite der Metallschicht 25 vorgesehen werden. Das oder die optischen Merkmale können zum Beispiel Sicherheitsmerkmale, Informationen und/ oder Dekorelemente umfassen. Mittels einer oder mehr der Overlay-Schichten 28 lassen sich weitere optische Effekte erzielen und die Schicht 27 kann geschützt werden.

Die verschiedenen Schritte des Verfahrens können auch in anderen Reihenfolgen ausgeführt werden. Ebenso ist es möglich, mehrere Schichten in einem einzelnen Klebevorgang zusammenzufügen.

## Patentansprüche

1. Chipkarte (10), aufweisend
ein flexibles Inlay (19) mit an einer Oberseite des Inlays (19) angeordneten Kontakten (15) der Chipkarte (10), wobei das Inlay (19) eine zu den Kontakten (15) beabstandete integrierte Schaltung (20) und Antenne (21) trägt,
eine obere Schicht (17) mit einer Ausnehmung (14), in welcher die Kontakte (15) angeordnet sind, und
eine unterhalb des Inlays (19) angeordnete Metallschicht (25) mit einem Schlitz (16), der sich von einer Umfangsfläche (13) der Metallschicht (25) bis in den Bereich der Ausnehmung (14) erstreckt und der sich durch die gesamte Dicke der Metallschicht (25) erstreckt, **dadurch gekennzeichnet, dass**
mittels des Inlays (19) die integrierte Schaltung (20) und die Antenne (21) aus dem Bereich der Ausnehmung (14) verlagert sind.

2. Chipkarte (10) nach Anspruch 1, **dadurch gekennzeichnet, dass** die obere Schicht (17) eine weitere Metallschicht mit einem Schlitz (16) ist, der sich von einer Umfangsfläche (13) der weiteren Metallschicht bis zu der Ausnehmung (14) erstreckt und der sich durch die gesamte Dicke der weiteren Metallschicht erstreckt.

3. Chipkarte (10) nach Anspruch 2, **dadurch gekennzeichnet, dass** zwischen der weiteren Metallschicht und dem Inlay (19) eine Klebstoffschicht (18) mit einer weiteren Ausnehmung (14) vorgesehen ist, dass die weitere Ausnehmung (14) der Klebstoffschicht (18) kleinere Abmessungen als die Ausnehmung (14) der weiteren Metallschicht aufweist und dass ein Teil der Klebstoffschicht (18) zwischen den Kontakten (15) und einer Innenwand der Ausnehmung (14) der weiteren Metallschicht angeordnet ist.

4. Chipkarte (10) nach Anspruch 1, **dadurch gekennzeichnet, dass** die obere Schicht (17) eine Schicht (17a) mit optischen Merkmalen und eine außenliegende Overlay-Schicht (17b) umfasst.

5. Chipkarte (10) nach einem der Ansprüche 1 bis 4, **dadurch gekennzeichnet, dass** die Metallschicht (25) mit mindestens einer außenliegenden Schicht (27, 28) bedeckt ist.

6. Chipkarte (10) nach einem der Ansprüche 1 bis 5, **dadurch gekennzeichnet, dass** ein Einsatz (23) unterhalb der Kontakte (15) angeordnet ist, der die Kontakte (15) in der Ausnehmung (14) der oberen Schicht (17) positioniert.

7. Chipkarte (10) nach Anspruch 6, **dadurch gekennzeichnet, dass** eine Höhe des Einsatzes (23), des Inlays (19) und der Kontakte (15) einer Höhe der Ausnehmung (14) der oberen Schicht (17) entspricht.

8. Chipkarte (10) nach einem der Ansprüche 1 bis 7, **dadurch gekennzeichnet, dass** innenliegende Kanten der Ausnehmung (14) der oberen Schicht (17) mit einer Fase (14a) versehen sind.

9. Chipkarte (10) nach einem der Ansprüche 1 bis 8, **dadurch gekennzeichnet, dass** die Antenne (21) im Bereich einer Umfangsfläche (13) der Chipkarte (10) angeordnet ist.

10. Verfahren zur Herstellung einer Chipkarte (10) mit den Schritten:
- Bereitstellen eines flexiblen Inlays (19) mit an einer Oberseite des Inlays (19) angeordneten Kontakten (15) der Chipkarte (10), wobei das Inlay (19) eine zu den Kontakten (15) beabstandete integrierte Schaltung (20) und Antenne (21) trägt,
- Anordnen einer oberen Schicht (17) mit einer Ausnehmung (14) an der Oberseite des Inlays (19) derart, dass die Kontakte (15) in der Ausnehmung (14) angeordnet sind, wobei mittels des Inlays (19) die integrierte Schaltung (20) und die Antenne (21) aus dem Bereich der Ausnehmung (14) verlagert sind,
- Anordnen einer Metallschicht (25) mit einem Schlitz (16) unterhalb des Inlays (19), der sich von einer Umfangsfläche (13) der Metallschicht (25) bis in den Bereich der Ausnehmung (14) erstreckt und der sich durch die gesamte Dicke der Metallschicht (25) erstreckt, und
- Laminieren der Schichten zu einer Chipkarte (10).

## Claims

1. Chip card (10), including
a flexible inlay (19) having contacts (15) of the chip card (10) arranged on an upper side of the inlay (19), wherein the inlay (19) carries an integrated circuit (20) and antenna (21) spaced apart from the contacts (15),
an upper layer (17) having a recess (14), in which the contacts (15) are arranged, and
a metal layer (25) arranged below the inlay (19), having a slot (16), which extends from a circumferential surface (13) of the metal layer (25) into the area of the recess (14) and which extends through the entire thickness of the metal layer (25), **characterized in that**
the integrated circuit (20) and the antenna (21) are displaced out of the area of the recess (14) by means of the inlay (19).

2. Chip card (10) according to Claim 1, **characterized in that** the upper layer (17) is a further metal layer having a slot (16), which extends from a circumferential surface (13) of the further metal layer to the recess (14) and extends through the entire thickness of the further metal layer.

3. Chip card (10) according to Claim 2, **characterized in that** an adhesive layer (18) having a further recess (14) is provided between the further metal layer and the inlay (19), **in that** the further recess (14) of the adhesive layer (18) has smaller dimensions than the recess (14) of the further metal layer, and **in that** a part of the adhesive layer (18) is arranged between the contacts (15) and an inner wall of the recess (14) of the further metal layer.

4. Chip card (10) according to Claim 1, **characterized in that** the upper layer (17) comprises a layer (17a) having optical features and an outer overlay layer (17b).

5. Chip card (10) according to any of Claims 1 to 4, **characterized in that** the metal layer (25) is covered using at least one outer layer (27, 28).

6. Chip card (10) according to any of Claims 1 to 5, **characterized in that** an insert (23) is arranged below the contacts (15), which positions the contacts (15) in the recess (14) of the upper layer (17).

7. Chip card (10) according to Claim 6, **characterized in that** a height of the insert (23), of the inlay (19), and of the contacts (15) corresponds to a height of the recess (14) of the upper layer (17).

8. Chip card (10) according to any of Claims 1 to 7, **characterized in that** inner edges of the recess (14) of the upper layer (17) are provided with a chamfer (14a).

9. Chip card (10) according to any of Claims 1 to 8, **characterized in that** the antenna (21) is arranged in the area of a circumferential surface (13) of the chip card (10).

10. Process for manufacturing a chip card (10), having the following steps:
- providing a flexible inlay (19) having contacts (15) of the chip card (10) arranged on an upper side of the inlay (19), wherein the inlay (19) carries an integrated circuit (20) and antenna (21) spaced apart from the contacts (15),
- arranging an upper layer (17) having a recess (14) on the upper side of the inlay (19) in such a way that the contacts (15) are arranged in the recess (14), wherein the integrated circuit (20) and the antenna (21) are displaced out of the area of the recess (14) by means of the inlay (19),
- arranging a metal layer (25) having a slot (16) below the inlay (19), which extends from a circumferential surface (13) of the metal layer (25) into the area of the recess (14) and extends through the entire thickness of the metal layer (25), and
- laminating the layers to form a chip card (10).

## Revendications

1. Carte à puce (10), comportant
une incrustation flexible (19) avec des contacts (15) de la carte à puce (10) disposés sur une face supérieure de l'incrustation (19), l'incrustation (19) supportant un circuit intégré (20) espacé des contacts (15) et une antenne (21),
une couche supérieure (17) avec un évidement (14), dans lequel les contacts (15) sont disposés, et
une couche métallique (25) disposée sous l'incrustation (19), avec une entaille (16), qui s'étend depuis une surface périphérique (13) de la couche métallique (25) jusque dans la zone de l'évidement (14) et qui s'étend à travers la totalité de l'épaisseur de la couche métallique (25), **caractérisée en ce que**
le circuit intégré (20) et l'antenne (21) sont déplacés hors de la zone de l'évidement (14) au moyen de l'incrustation (19).

2. Carte à puce (10) selon la revendication 1, **caractérisée en ce que** la couche supérieure (17) est une autre couche métallique avec une entaille (16), qui s'étend depuis une surface périphérique (13) de l'autre couche métallique jusqu'à l'évidement (14) et qui s'étend à travers la totalité de l'épaisseur de l'autre couche métallique.

3. Carte à puce (10) selon la revendication 2, **caractérisée en ce qu'**une couche de colle (18) avec un autre évidement (14) est prévue entre l'autre couche métallique et l'incrustation (19), que l'autre évidement (14) de la couche de colle (18) présente des dimensions inférieures à celles de l'évidement (14) de l'autre couche métallique, et qu'une partie de la couche de colle (18) est disposée entre les contacts (15) et une paroi intérieure de l'évidement (14) de l'autre couche métallique.

4. Carte à puce (10) selon la revendication 1, **caractérisée en ce que** la couche supérieure (17) comprend une couche (17a) avec des caractéristiques optiques et une surcouche (17b) située à l'extérieur.

5. Carte à puce (10) selon l'une des revendications 1 à 4, **caractérisée en ce que** la couche métallique (25) est recouverte d'au moins une couche située à l'extérieur (27, 28).

6. Carte à puce (10) selon l'une des revendications 1 à 5, **caractérisée en ce qu'**un insert (23) est disposé sous les contacts (15), qui positionne les contacts (15) dans l'évidement (14) de la couche supérieure (17).

7. Carte à puce (10) selon la revendication 6, **caractérisée en ce qu'**une hauteur de l'insert (23), de l'incrustation (19) et des contacts (15) correspond à une hauteur de l'évidement (14) de la couche supérieure (17).

8. Carte à puce (10) selon l'une des revendications 1 à 7, **caractérisée en ce que** des bords situés à l'intérieur de l'évidement (14) de la couche extérieure (17) sont pourvus d'un chanfrein (14a).

9. Carte à puce (10) selon l'une des revendications 1 à 8, **caractérisée en ce que** l'antenne (21) est disposée dans la zone d'une surface périphérique (13) de la carte à puce (10).

10. Procédé de fabrication d'une carte à puce (10), avec les étapes de :
- fourniture d'une incrustation flexible (19) avec des contacts (15) de la carte à puce (10) disposés sur une face supérieure de l'incrustation (19), l'incrustation (19) supportant un circuit intégré (20) espacé des contacts (15) et une antenne (21),
- disposition d'une couche supérieure (17) avec un évidement (14) sur la face supérieure de l'incrustation (19) de telle manière que les contacts (15) sont disposés dans l'évidement (14), le circuit intégré (20) et l'antenne (21) étant déplacés hors de la zone de l'évidement (14) au moyen de l'incrustation (19),
- disposition d'une couche métallique (25) avec une entaille (16) sous l'incrustation (19), qui s'étend depuis une surface périphérique (13) de la couche métallique (25) jusque dans la zone de l'évidement (14) et qui s'étend à travers la totalité de l'épaisseur de la couche métallique (25), et
- laminage des couches en une carte à puce (10).
